# EUROPÄISCHE PATENTSCHRIFT

(11) **EP 1 840 017 B1**
(45) Veröffentlichungstag und Bekanntmachung des Hinweises auf die Patenterteilung: **08.02.2012**
(21) Anmeldenummer: 07003850.0
(22) Anmeldetag: 26.02.2007
(51) Int. Cl.: B62D 35/00, B62D 37/02

(54) **Luftleitvorrichtung für ein Fahrzeug**
Air conduction device for a vehicle
Dispositif de commande d'air pour véhicule

(30) Priorität: 28.03.2006 DE 102006014259
(43) Veröffentlichungstag der Anmeldung: 03.10.2007
(73) Patentinhaber: Dr. Ing. h.c. F. Porsche AG, 70435 Stuttgart (DE)
(72) Erfinder: Fröschle, Mathias, 73760 Ostfildern (DE); Schulzki, Markus, 71638 Ludwigsburg (DE)

(56) Entgegenhaltungen:
- DE-A1-102004 030 571
- JP-A- 2 117 476

## Beschreibung

Die Erfindung betrifft eine Luftleitvorrichtung für ein Fahrzeug nach dem Oberbegriff des Patentanspruchs 1.

Die DE 10 2004 030 571 A1 zeigt eine solche Luftleitvorrichtung für ein Fahrzeug. Sie ist im Heckbereich des Fahrzeugs angeordnet und weist ein mittleres Hauptluftleitelement auf, an dem jeweils seitlich außen ein Zusatzluftleitelement verfahrbar angebracht ist. Werden die Zusatzluftleitelemente verfahren, vergrößert sich die Erstreckung der Luftleitvorrichtung in Fahrzeugquerrichtung, wenn das Hauptluftleitelement aus einer eingefahrenen Ruhestellung in eine ausgefahrene Betriebsstellung bewegt wird.

Aus der JP 02 117 476 A ist eine Luftleitvorrichtung bekannt, die ein Hauptelement aufweist, an dem ein in Richtung Fahrzeugheck ausfahrbares Zusatzelement angelenkt ist.

Aus der DE 30 19 150 A1 ist eine Luftleitvorrichtung für ein Fahrzeug bekannt, die in einem oben liegenden Heckbereich des Fahrzeugs angeordnet ist und ein Luftleitelement umfasst, welches von einer Ruhestellung, in der es oberflächenbündig in den Formverlauf des Heckbereichs integriert ist, in eine ausgefahrene Betriebsstellung verlagerbar ist. Das Luftleitelement ist als Tragflügel ausgebildet, der mittels einer Betätigungseinrichtung von der Ruhestellung in die Betriebsstellung und umgekehrt verlagerbar bzw. überführbar ist.

Die DE 43 05 090 A1 offenbart ebenfalls eine Luftleitvorrichtung für ein Fahrzeug, die in einem Heckbereich des Fahrzeugs angeordnet ist und ein Luftleitelement umfasst, welches von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von der Ruhestellung in die Betriebsstellung und umgekehrt verlagerbar ist.

Mit den aus der DE 30 19 150 A1 und aus der DE 43 05 090 A1 bekannten Luftleitvorrichtungen kann der Hinterachsabtriebsbeiwert (Cₐₕ-Wert) des Kraftfahrzeugs bei gleichbleibendem oder auch verbessertem Luftwiederstandsbeiwert (c_{w}-Wert) erhöht werden, wobei diese bekannten Luftleitelemente in der Ruhestellung und in der Betriebsstellung jeweils dieselbe Quererstreckung aufweisen.

Die nachveröffentlichte DE 10 2005 030 203 A1 offenbart eine Luftleitvorrichtung für ein Fahrzeug, die ein mittleres Hauptluftleitelement sowie zwei seitliche Zusatzluftleitelemente umfasst, wobei mit Hilfe der Zusatzluftleitelemente die Quererstreckung der Luftleitvorrichtung in der Betriebsstellung vergrößert werden kann. Hierdurch kann die wirksame aerodynamische Anströmfläche der Luftleitvorrichtung in der Betriebsstellung vergrößert werden, wodurch insbesondere der Hinterachsabtriebsbeiwert weiter erhöht werden kann. Nach der DE 10 2005 03 203 dienen die seitlichen Zusatzluftleitelemente ausschließlich der Vergrößerung der Quererstreckung des Hauptluftleitelements bzw. der Luftleitvorrichtung.

Hiervon ausgehend liegt der vorliegenden Erfindung das Problem zu Grunde eine neuartige Luftleitvorrichtung für ein Fahrzeug zu schaffen. Dieses Problem wird dadurch gelöst, dass die eingangs genannte Luftleitvorrichtung durch die Merkmale des kennzeichnenden Teils des Patentanspruchs 1 weitergebildet ist. Erfindungsgemäß sind die seitlichen Zusatzluftleitelemente unter Vergrößerung der Quererstreckung und unter gleichzeitiger Vergrößerung der Längserstreckung des Hauptluftleitelements bzw. der Luftleitvorrichtung von einer ebenfalls eingefahrenen Ruhestellung in eine ebenfalls ausgefahrene Betriebsstellung verlagerbar. Die gleichzeitige Vergrößerung der Quererstreckung und der Längserstreckung des Hauptluftleitelements bzw. der Luftleitvorrichtung ist aerodynamisch besonders vorteilhaft.

Vorzugsweise ist jedes der seitlichen Zusatzluftleitelemente über jeweils eine Betätigungseinrichtung quer zur Längsrichtung des Fahrzeugs sowie gleichzeitig in Längsrichtung des Fahrzeugs und damit nach schräg hinten von der Ruhestellung in die Betriebsstellung überführbar, wobei gleichzeitig bzw. simultan mit der Verlagerung der seitlichen Zusatzluftleitelemente nach schräg hinten jedes der seitlichen Zusatzluftleitelemente über eine Aufstelleinrichtung nach oben schwenkbar ist, und wobei das mittlere Hauptluftleitelement an die seitlichen Zusatzluftleitelemente derart über eine Kopplungseinrichtung gekoppelt ist, dass gleichzeitig bzw. simultan mit der Verlagerung der seitlichen Zusatzluftleitelemente das mittlere Hauptluftleitelement bei der Überführung von der Ruhestellung in die Betriebsstellung nach oben schwenkbar ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Heckbereich eines Fahrzeugs mit einer Luftleitvorrichtung in Ruhestellung in Draufsicht;
- Fig. 2: den Heckbereich der Fig. 1 mit der Luftleitvorrichtung in Betriebsstellung in einer Ansicht analog Fig. 1;
- Fig. 3: den Heckbereich der Fig. 1 und 2 mit der Luftleitvorrichtung in Ruhestellung in Rückansicht;
- Fig. 4: den Heckbereich der Fig. 1 und 2 mit der Luftleitvorrichtung in Betriebsstellung in einer Ansicht analog Fig. 3;
- Fig. 5: den Heckbereich der Fig. 1 bis 4 mit der Luftleitvorrichtung in Ruhestellung in perspektivischer Ansicht von schräg hinten;
- Fig. 6: den Heckbereich der Fig. 1 bis 4 mit der Luftleitvorrichtung in Betriebsstellung in einer Ansicht analog Fig. 5;
- Fig. 7: den Heckbereich der Fig. 1 bis 6 mit der Luftleitvorrichtung in Ruhestellung in Seitenansicht;
- Fig. 8: den Heckbereich der Fig. 1 bis 6 mit der Luftleitvorrichtung in Betriebsstellung in einer Ansicht analog Fig. 7;
- Fig. 9: die Luftleitvorrichtung der Fig. 1 bis 8 in Ruhestellung in perspektivischer Rückansicht;
- Fig. 10: die Luftleitvorrichtung der Fig. 1 bis 8 in Betriebsstellung in perspektivischer Ansicht von schräg hinten;
- Fig. 11: die Luftleitvorrichtung der Fig. 1 bis 8 in Betriebsstellung in Rückansicht;
- Fig. 12: einen schematisierten Querschnitt durch den Heckbereich der Fig. 1 bis 8 mit der Luftleitvorrichtung in Ruhestellung;
- Fig. 13: den Querschnitt der Fig. 12 mit der Luftleitvorrichtung in Betriebsstellung;
- Fig. 14: einen alternativen schematisierten Querschnitt durch den Heckbereich der Fig. 1 bis 8 mit der Luftleitvorrichtung in Ruhestellung;
- Fig. 15: den Querschnitt der Fig. 14 mit der Luftleitvorrichtung in Betriebsstellung;
- Fig. 16: einen weiteren alternativen schematisierten Querschnitt durch den Heckbereich der Fig. 1 bis 8 mit der Luftleitvorrichtung in Ruhestellung; und
- Fig. 17: den Querschnitt der Fig. 16 mit der Luftleitvorrichtung in Betriebsstellung.

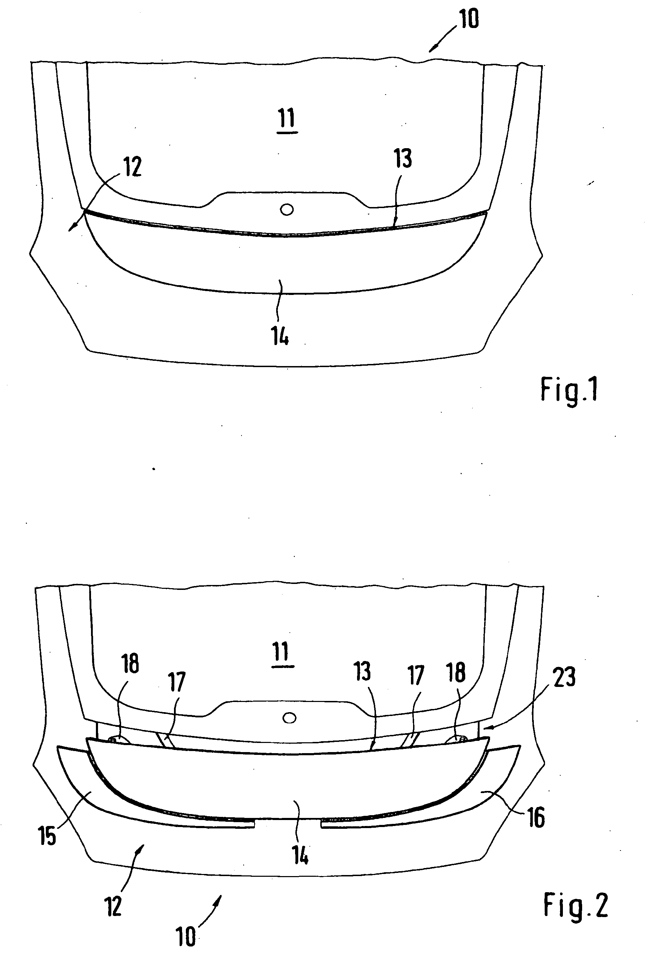

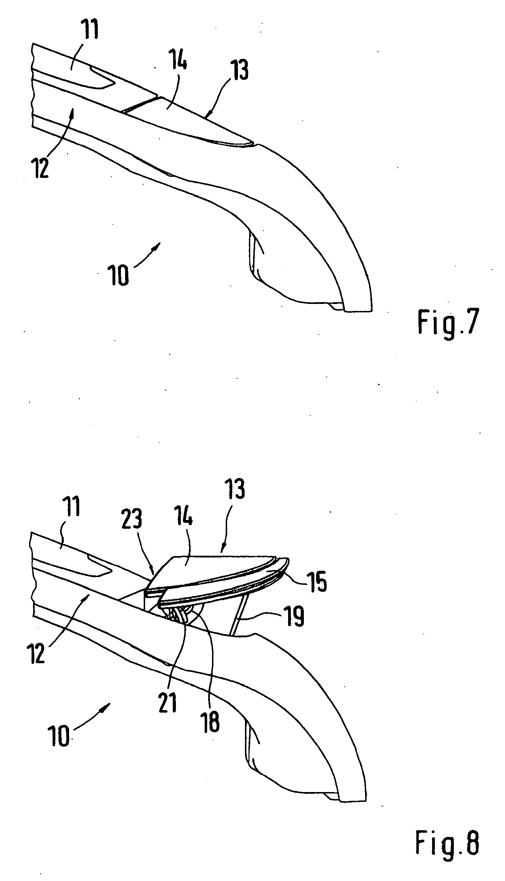

Fig. 1 bis 8 zeigen unterschiedliche Ansichten eines Heckbereichs 10 eines Fahrzeugaufbaus, wobei der Heckbereich 10 eine Heckscheibe 11 umfasst, die vorne, hinten sowie seitlich von einem Karosserieteil 12 umschlossen ist. In einem hinteren Bereich des Karosserieteils 12 des fließheckartig ausgebildeten Heckbereichs 10 und demnach unterhalb des Heckfensters 11 ist eine Luftleitvorrichtung 13 positioniert, wobei die Fig. 1, 3, 5 und 7 die Luftleitvorrichtung 13 in einer Ruhestellung und die Fig. 2, 4, 6 und 8 dieselbe in einer Betriebsstellung zeigen.

In der Ruhestellung (siehe Fig. 1, 3, 5, 7) ist die Luftleitvorrichtung 13 oberflächenbündig in den Heckbereich 10 des Fahrzeugs integriert. In der Betriebsstellung (siehe Fig. 2, 4, 6, 8) hingegen ist die Luftleitvorrichtung 13 aus der Oberflächenkontur des Heckbereichs 10 heraus bewegt.

Die gezeigte, erfindungsgemäße Luftleitvorrichtung 13 verfügt über ein mittleres Hauptluftleitelement 14 sowie zwei seitliche Zusatzluftleitelemente 15 und 16, wobei die Zusatzluftleitelemente 15 und 16 lediglich in der Betriebsstellung (siehe Fig. 2, 4, 6, 8) der Luftleitvorrichtung 13 sichtbar sind. In der Ruhestellung sind die seitlichen Zusatzluftleitelemente 15, 16 vollständig unter das in der Ruhestellung oberflächig in den Formverlauf des Heckbereichs 10 integrierte, mittlere Hauptluftleitelement 14 verlagert und demnach nicht sichtbar.

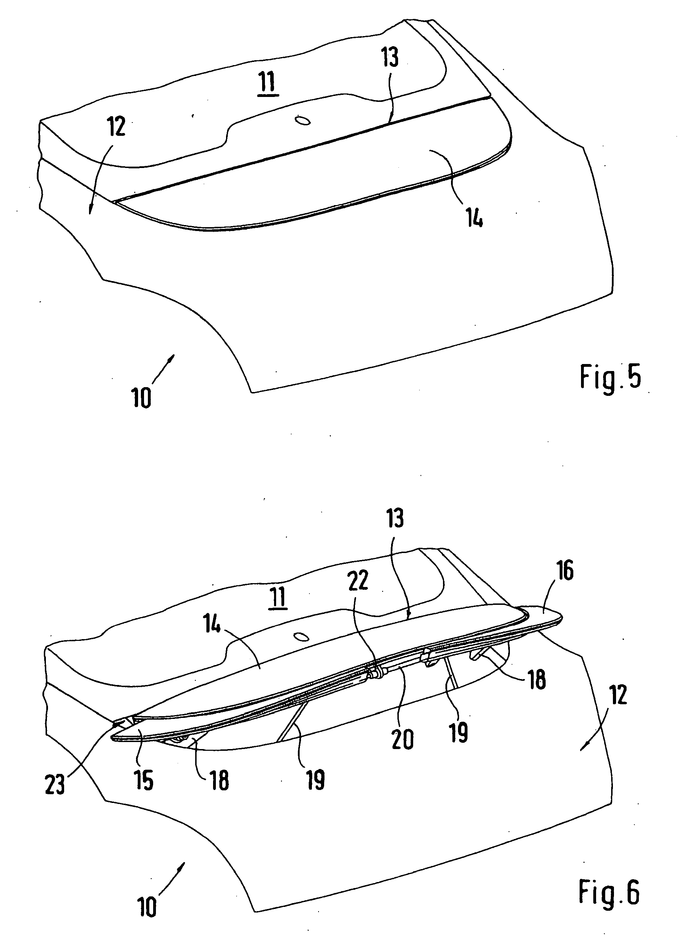

Wie am besten Fig. 2 und 6 entnommen werden kann, sind die seitlichen Zusatzluftleitelemente 15 , 16 derart ausgebildet, dass dieselben bei der Überführung von der Ruhestellung in die Betriebsstellung unter gleichzeitiger Vergrößerung der Quererstreckung und der Längserstreckung der Luftleitvorrichtung 13 bzw. des Hauptluftleitelements 14 verlagerbar sind. Hierdurch wird die wirksame aerodynamische Anströmfläche der Luftleitvorrichtung 13 in zwei Dimensionen vergrößert, nämlich einerseits quer zur Längserstreckung und andererseits in Längserstreckung des Fahrzeugs.

Jedes der seitlichen Zusatzluftleitelemente 15 und 16 ist über jeweils eine Betätigungseinrichtung von der Ruhestellung in die Betriebsstellung nach schräg hinten und demnach sowohl quer zur Längsrichtung als auch in Längsrichtung des Fahrzeugs verfahrbar. Jede der Betätigungseinrichtungen umfasst dabei im gezeigten Ausführungsbeispiel zwei Betätigungselemente 17 und 18. Die Betätigungselemente 17, 18 werden nachfolgend als Betätigungsstangen bezeichnet. Die Betätigungselemente 17, 18 können auch als Betätigungslenker bezeichnet werden.

Die Betätigungsstangen 17, 18 sind einerseits mit dem jeweiligen Zusatzluftleitelement 15 bzw. 16 und andererseits mit dem Karosserieteil 12 gelenkig verbunden. Die Verbindung der Betätigungsstangen 17, 18 mit den seitlichen Zusatzluftleitelementen 15, 16 erfolgt vorzugsweise über Kugelgelenke.

An gegenüberliegenden Enden sind die Betätigungsstangen 17 und 18 gelenkig mit dem Karosserieteil 12 verbunden, und zwar entweder unmittelbar oder über nichtdargestellte, karosserieseitige Montagefüße bzw. eine durchgehende Montageplatte. An diesen gegenüberliegenden Enden der Betätigungsstangen 17 und 18 sind die Gelenke vorzugsweise als Drehgelenke ausgeführt.

Gekoppelt mit der Verlagerung der seitlichen Zusatzluftleitelemente 15 und 16 nach schräg hinten ist jedes der seitlichen Zusatzluftleitelemente 15 und 16 gleichzeitig bzw. simultan durch jeweils eine Aufstelleinrichtung nach oben schwenkbar.

Jede der Aufstelleinrichtungen umfasst im gezeigten Ausführungsbeispiel ein Aufstellelement 19, welches nachfolgend als Aufstellstange bezeichnet wird. Jede Aufstellstange 19 ist einerseits mit dem jeweiligen Zusatzluftleitelement 15 bzw. 16 und andererseits mit dem Karosserieteil 12 bzw. dem nicht-dargestellten, karosserieseitigen Montagefuß oder der Montageplatte des Zusatzluftleitelements gelenkig verbunden, nämlich jeweils über Kugelgelenke. Das Aufstellelement 19 kann auch als Aufstelllenker bezeichnet werden.

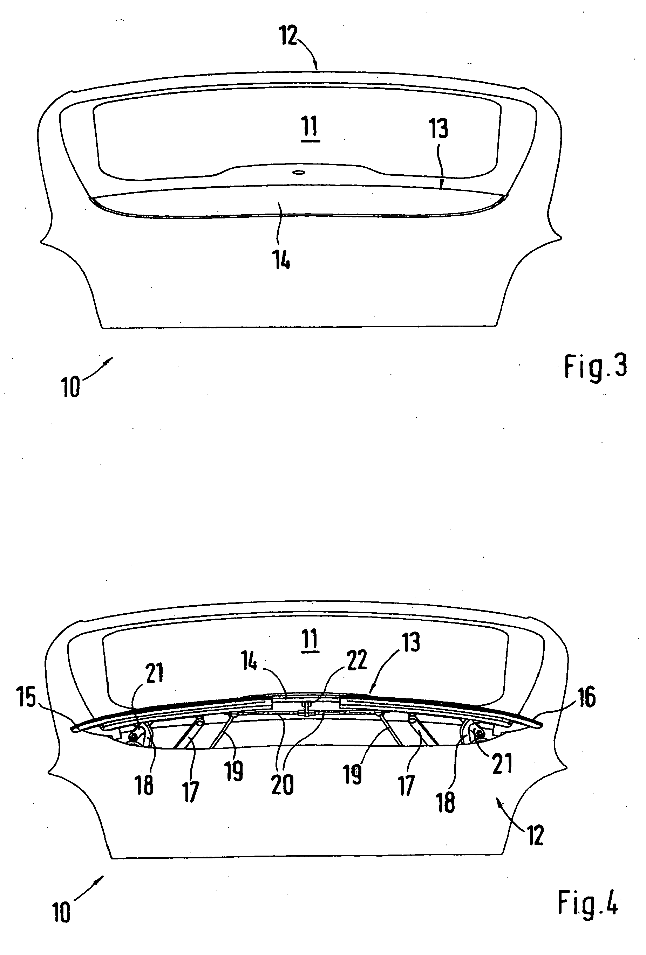

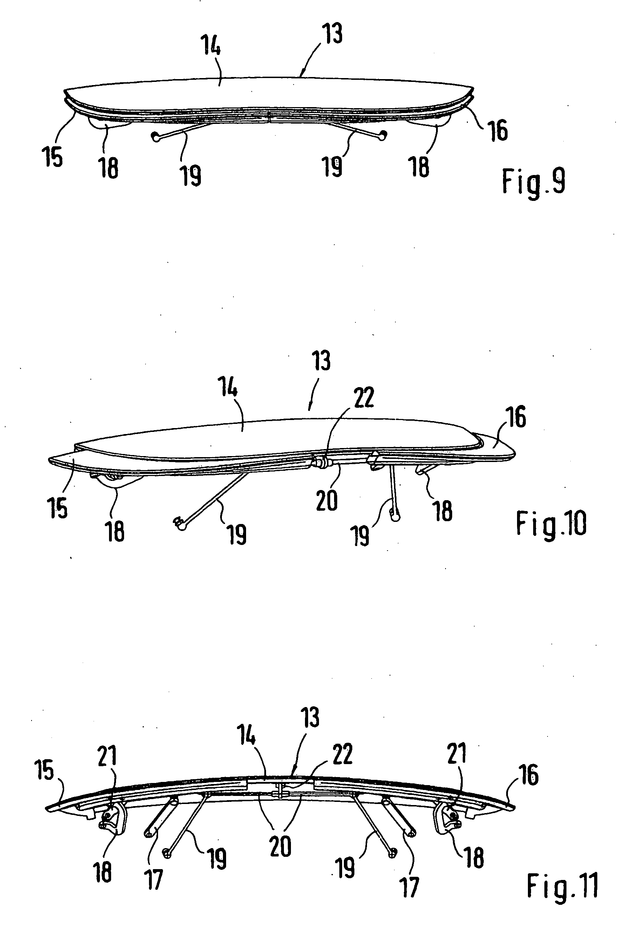

Wie am besten Fig. 4 und 11 entnommen werden kann, sind die Aufstellelemente bzw. Aufstellstangen 19 der beiden seitlichen Zusatzluftleitelemente 15 und 16 untereinander über eine Querstange 20 verbunden. Die Querstange 20 greift dabei an den als Kugelgelenken ausgeführten Gelenkstellen zwischen den Aufstellstangen 19 und dem jeweiligen Zusatzluftleitelement 15 bzw. 16 an.

An die oben beschriebene Verlagerung der seitlichen Zusatzluftleitelemente 15 und 16, die durch eine gleichzeitige Verstellung nach schräg hinten und Verschwenkung nach oben bei der Überführung von der Ruhestellung in die Betriebsstellung gekennzeichnet ist, ist die Verlagerung des mittleren Hauptluftleitelements 14 derart gekoppelt, dass gleichzeitig mit der Verlagerung der seitlichen Zusatzluftleitelemente 15 und 16 das Hauptluftleitelement 14 bei der Überführung von der Ruhestellung in die Betriebsstellung nach oben schwenkbar ist.

Hierzu ist das mittlere Hauptluftleitelement 14 über eine Kopplungseinrichtung mit den seitlichen Zusatzluftleitelementen 15 und 16 gekoppelt. So ist das mittlere Hauptluftleitelement 14 über jeweils ein Kopplungselement 21 (siehe insbesondere Fig. 4, 11) mit den seitlichen Zusatzluftleitelementen 15 und 16 gelenkig verbunden, wobei ein weiteres Kopplungselement 22 das Hauptluftleitelement 14 mit der die Aufstellstangen 19 verbindenden Querstange 20 koppelt. Durch die Kopplungselemente 21 und 22 wird das mittlere Hauptluftleitelement 14 synchronisiert zu den seitlichen Zusatzluftleitelementen 15 und 16 bei der Überführung von der Ruhestellung in die Betriebsstellung durch Verschwenken angehoben bzw. bei der Überführung von der Betriebsstellung in die Ruhestellung durch Verschwenken abgesenkt. Die Kopplungselemente 21 und 22 können auch als Kopplungsstangen bzw. Kopplungslenker bezeichnet werden.

Nach einer vorteilhaften Weiterbildung der hier vorliegenden Erfindung ist in vordere Abschnitte der Zusatzluftleitelemente 15 und 16 eine an eine Hinterkantenkontur des mittleren Hauptluftleitelements 14 angepasste Vertiefung eingebracht, wobei in Betriebsstellung hintere Abschnitte des mittleren Hauptluftleitelements 14 in diese Vertiefung eingreifen und so die seitlichen Zusatzluftleitelemente 15 und 16 das mittlere Hauptluftleitelement 14 seitlich sowie hinten flächenbündig vergrößern. Dies zeigen Fig. 6 und 10 für das rechte seitliche Zusatzluftleitelement 16, für das linke seitliche Zusatzluftleitelement 15 hingegen ist diese Vertiefung nicht dargestellt, so dass zwischen dem mittleren Hauptluftleitelement 14 und dem linken seitlichen Zusatzluftleitelement 15 eine Stufe ausgebildet ist.

Wie am besten Fig. 2 entnommen werden kann, bildet sich bei der Verlagerung des mittleren Hauptluftleitelements 14 von der Ruhestellung in die Betriebsstellung zwischen dem mittleren Hauptluftleitelement 14 und dem Karosserieteil 12 eine Lücke 23 aus, die aus aerodynamischen Gründen zu verschließen ist.

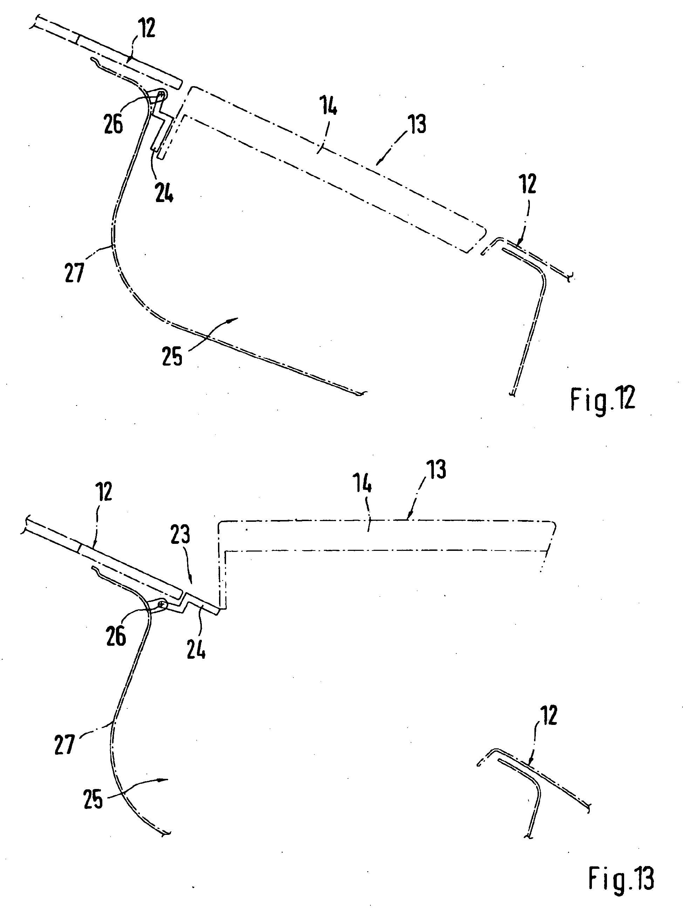

Hierzu kann das in den Fig. 12 und 13 gezeigte Verschlusselement 24 dienen, welches gemäß Fig. 12, 13 als verschwenkbare Klappe ausgebildet. Dann, wenn die Luftleitvorrichtung 13 in die Betriebsstellung (siehe Fig. 13) verfahren ist, ist das Verschlusselement 24 nach oben verschwenkt, um die Lücke 23 zu verschließen.

Dann hingegen, wenn das Hauptluftleitelement 14 in die Ruhestellung (siehe Fig. 12) verfahren ist, ist das Verschlusselement 24 in einen Aufnahmeraum 25 für die Luftleitvorrichtung 13 hinein geklappt. Gemäß Fig. 12 und 13 ist hierzu das klappenartige Verschlusselement 24 über ein Gelenk 26 mit einer den Aufnahmeraum 25 begrenzenden Wand 27 verbunden.

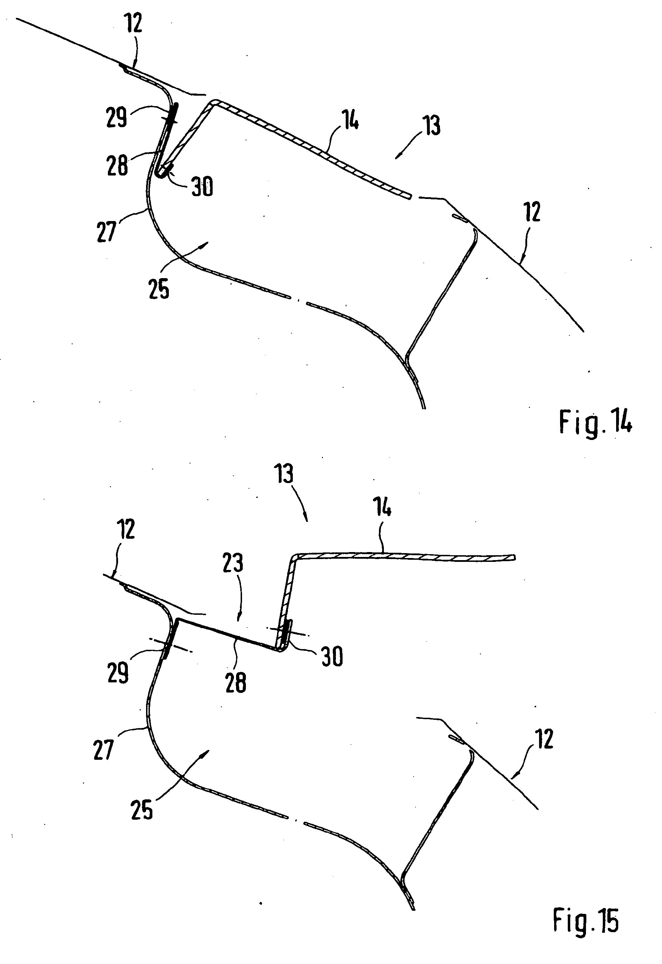

Eine alternative Ausführungsform eines Verschlusselements 28 für die Lücke 23 zwischen dem vorderen Ende der Luftleitvorrichtung 13 und dem Karosserieabschnitt 12 zeigen Fig. 14 und 15, wobei in Fig. 14 und 15 das Verschlusselement 28 als flexibler Verschlussstreifen aus einem Textilmaterial oder einem gummiartigem Material ausgebildet ist. Der flexible Verschlussstreifen 28 ist mit der den Aufnahmeraum 25 begrenzenden Wand 27 an einem Abschnitt 29 fest verbunden. Mit einem gegenüberliegenden Abschnitt 30 liegt das Verschlusselement 28 am Hauptluftleitelement an.

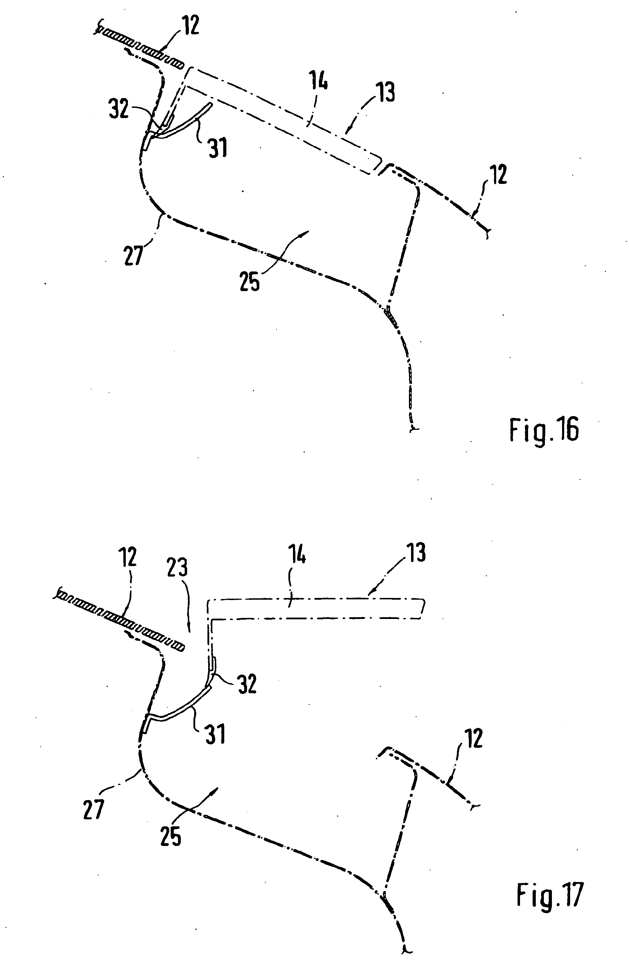

Eine weitere alternative Ausführungsform eines Verschlusselements 31 für die Lücke 23 zwischen dem vorderen Ende der Luftleitvorrichtung 13 und dem Karosserieabschnitt 12 zeigen Fig. 16 und 17, wobei in Fig. 16 und 17 das Verschlusselement 31 als karosseriefestes Element ausgeführt ist, welches mit einer dem Hauptluftleitelement 14 zugeordneten Dichtlippe 32 zusammenwirkt. In jeder Position des Hauptluftleitelements 14 liegt die Dichtlippe 32 am karosseriefesten Verschlusselement 31 zur Abdichtung der Lücke 23 an.

## Patentansprüche

1. Luftleitvorrichtung für ein Fahrzeug, insbesondere für ein Personenkraftfahrzeug, die in einem Heckbereich des Fahrzeugs angeordnet ist und mindestens ein mittleres Hauptluftleitelement umfasst, welches von einer eingefahrenen Ruhestellung in eine ausgefahrene Betriebsstellung verlagerbar ist, wobei seitliche Zusatzluftleitelemente zusammen mit dem oder jedem Hauptluftleitelement verlagerbar sind, **dadurch gekennzeichnet, dass** jedes der seitlichen Zusatzluftleitelemente (15, 16) unter Vergrößerung der Quererstreckung und unter gleichzeitiger Vergrößerung der Längserstreckung des Hauptluftleitelements (14) bzw. der Luftleitvorrichtung von einer ebenfalls eingefahrenen Ruhestellung in eine ebenfalls ausgefahrene Betriebsstellung sowohl quer zur Längsrichtung als auch in Längsrichtung des Fahrzeugs verlagerbar sind.

2. Luftleitvorrichtung nach Anspruch 1, **dadurch gekennzeichnet, dass** jedes der seitlichen Zusatzluftleitelemente (15, 16) über jeweils eine Betätigungseinrichtung quer zur Längsrichtung des Fahrzeugs und gleichzeitig in Längsrichtung des Fahrzeugs nach schräg hinten von der Ruhestellung in die Betriebsstellung überführbar ist.

3. Luftleitvorrichtung nach Anspruch 2, **dadurch gekennzeichnet, dass** jede Betätigungseinrichtung mindestens zwei Betätigungselemente (17, 18) aufweist, wobei jedes der Betätigungselemente (17, 18) einerseits mit dem jeweiligen Zusatzluftleitelement (15, 16) und andererseits mit einem Karosserieteil (12) gelenkig verbunden ist.

4. Luftleitvorrichtung nach Anspruch 2 oder 3, **dadurch gekennzeichnet, dass** gekoppelt mit der Verlagerung der seitlichen Zusatzluftleitelemente (15, 16) nach schräg hinten jedes der seitlichen Zusatzluftleitelemente (15, 16) über jeweils eine Aufstelleinrichtung nach oben schwenkbar ist.

5. Luftleitvorrichtung nach Anspruch 4, **dadurch gekennzeichnet, dass** jede Aufstelleinrichtung mindestens ein Aufstellelement (19) aufweist, wobei jedes der Aufstellelemente (19) einerseits mit dem jeweiligen Zusatzluftleitelement (15, 16) und andererseits mit einem Karosserieteil (12) gelenkig verbunden ist.

6. Luftleitvorrichtung nach Anspruch 5, **dadurch gekennzeichnet, dass** die Aufstellelemente (19) untereinander über eine Querstange (20) verbunden sind, die an Gelenkstellen zwischen den Aufstellelementen (19) und dem jeweiligen Zusatzluftleitelement (15, 16) angreift.

7. Luftleitvorrichtung nach einem oder mehreren der Ansprüche 1 bis 6, **dadurch gekennzeichnet, dass** das mittlere Hauptluftleitelement (14) an die seitlichen Zusatzluftleitelemente (15, 16) derart über eine Kopplungseinrichtung gekoppelt ist, dass gleichzeitig mit der Verlagerung der seitlichen Zusatzluftleitelemente (15, 16) das Hauptluftleitelement (14) bei der Überführung von der Ruhestellung in die Betriebsstellung nach oben schwenkbar ist.

8. Luftleitvorrichtung nach Anspruch 7, **dadurch gekennzeichnet, dass** die das mittlere Haupduftleitelement (14) über jeweils ein Kopplungselement (21) mit den seitlichen Zusatzluftleitelementen (15, 16) und über ein weiteres Kopplungselement (22) mit der die Aufstellelemente (19) verbindenden Querstange (20) gekoppelt ist.

9. Luftleitvorrichtung nach einem oder mehreren der Ansprüche 1 bis 8, **dadurch gekennzeichnet, dass** die seitlichen Zusatzluftleitelemente (15, 16) in Ruhestellung in eine Position unterhalb des mittleren Hauptluftleitelements (14) verlagert und nicht sichtbar sind.

10. Luftleitvorrichtung nach einem oder mehreren der Ansprüche 1 bis 9, **dadurch gekennzeichnet, dass** die seitlichen Zusatzluftleitelemente (15, 16) in vorderen Abschnitten eine an eine Hinterkantenkontur des mittleren Hauptluftleitelements (14) angepasste Vertiefung aufweisen, wobei in Betriebsstellung hintere Abschnitte des mittleren Hauptluftleitelements (14) in die Vertiefungen eingreifen und so die seitlichen Zusatzluftleitelemente (15, 16) das mittlere Haupäuftleitelement (14) flächenbündig vergrößern.

11. Luftleitvorrichtung nach einem oder mehreren der Ansprüche 1 bis 10, **dadurch gekennzeichnet, dass** eine sich bei der Verlagerung des mittleren Hauptluftleitelements (14) von der Ruhestellung in die Betriebsstellung ausbildende Lücke (23) zwischen dem Karosserieteil (12) und einem vorderen Ende des Hauptluftleitelements (14) durch ein Verschlusselement (24; 28) verschließbar ist.

## Claims

1. Air conduction device for a vehicle, in particular for a passenger motor vehicle, the air conduction device being arranged in a rear region of the vehicle and comprising at least one central main air conduction element which can be displaced from a retracted inoperative position into an extended operative position, wherein lateral additional air conduction elements can be displaced together with the or each main air conduction element, **characterized in that** each of the lateral additional air conduction elements (15, 16) can be displaced both transversely with respect to the longitudinal direction and also in the longitudinal direction of the vehicle from a likewise retracted inoperative position into a likewise extended operation position, increasing the transverse extent and simultaneously increasing the longitudinal extent of the main air conduction element (14) and of the air conduction device.

2. Air conduction device according to Claim 1, **characterized in that** each of the lateral additional air conduction elements (15, 16) can be transferred via a respective actuating device transversely with respect to the longitudinal direction of the vehicle and simultaneously in the longitudinal direction of the vehicle obliquely rearwards from the inoperative position into the operative position.

3. Air conduction device according to Claim 2, **characterized in that** each actuating device has at least two actuating elements (17, 18), each of the actuating elements (17, 18) being connected in an articulated manner at one end to the respective additional air conduction element (15, 16) and at the other end to a body part (12).

4. Air conduction device according to Claim 2 or 3, **characterized in that**, coupled to the displacement of the lateral additional air conduction elements (15, 16) obliquely rearwards, each of the lateral additional air conduction elements (15, 16) can be pivoted upwards via a respective erecting device.

5. Air conduction device according to Claim 4, **characterized in that** each erecting device has at least one erecting element (19), each of the erecting elements (19) being connected in an articulated manner at one end to the respective additional air conduction element (15, 16) and at the other end to a body part (12).

6. Air conduction device according to Claim 5, **characterized in that** the erecting elements (19) are connected to one another via a transverse rod (20) which acts on points of articulation between the erecting elements (19) and the respective additional air conduction element (15, 16).

7. Air conduction device according to one or more of Claims 1 to 6, **characterized in that** the central main air conduction element (14) is coupled to the lateral additional air conduction elements (15, 16) via a coupling device in such a manner that, at the same time as the displacement of the lateral additional air conduction elements (15, 16), the main air conduction element (14) can be pivoted upwards during the transfer from the inoperative position into the operative position.

8. Air conduction device according to Claim 7, **characterized in that** the central main air conduction element (14) is coupled via a respective coupling element (21) to the lateral additional air conduction elements (15, 16) and via a further coupling element (22) to the transverse rod (20) connecting the erecting elements (19).

9. Air conduction device according to one or more of Claims 1 to 8, **characterized in that** the lateral additional air conduction elements (15, 16) are displaced in the inoperative position into a position below the central main air conduction element (14) and are not visible.

10. Air conduction device according to one or more of Claims 1 to 9, **characterized in that** the lateral additional air conduction elements (15, 16) have, in front sections, a depression which is matched to a rear edge contour of the central main air conduction element (14), with rear sections of the central main air conduction element (14) engaging in the depressions in the operative position and therefore the lateral additional air conduction elements (15, 16) enlarge the central main air conduction element (14) in a manner flush with the surface thereof.

11. Air conduction device according to one or more of Claims 1 to 10, **characterized in that** a gap (23) between the body part (12) and a front end of the main air conduction element (14), which gap is formed when the central main air conduction element (14) is displaced from the inoperative position into the operative position, can be closed by a closure element (24; 28).

## Revendications

1. Dispositif de guidage d'air pour un véhicule, en particulier pour un véhicule automobile léger, qui est disposé dans une région arrière du véhicule et qui comprend au moins un élément de guidage d'air principal qui peut être déplacé d'une position de repos rentrée à une position fonctionnelle sortie, des éléments de guidage d'air supplémentaires latéraux pouvant être déplacés conjointement avec le ou chaque élément de guidage d'air principal, **caractérisé en ce que** chacun des éléments de guidage d'air supplémentaires latéraux (15, 16) peut être déplacé en augmentant l'étendue transversale et en augmentant simultanément l'étendue longitudinale de l'élément de guidage d'air principal (14) ou du dispositif de guidage d'air d'une position de repos également rentrée à une position fonctionnelle également sortie, à la fois transversalement à la direction longitudinale et dans la direction longitudinale du véhicule.

2. Dispositif de guidage d'air selon la revendication 1, **caractérisé en ce que** chacun des éléments de guidage d'air supplémentaires latéraux (15, 16) peut être transféré par le biais d'un dispositif d'actionnement respectif transversalement à la direction longitudinale du véhicule et simultanément dans la direction longitudinale du véhicule obliquement vers l'arrière depuis la position de repos jusqu'à la position fonctionnelle.

3. Dispositif de guidage d'air selon la revendication 2, **caractérisé en ce que** chaque dispositif d'actionnement présente au moins deux éléments d'actionnement (17, 18), chacun des éléments d'actionnement (17, 18) étant connecté de manière articulée d'une part à l'élément de guidage d'air supplémentaire respectif (15, 16) et d'autre part à une partie de la carrosserie (12).

4. Dispositif de guidage d'air selon la revendication 2 ou 3, **caractérisé en ce que** chacun des éléments de guidage d'air supplémentaires latéraux (15, 16), conjointement au déplacement des éléments de guidage d'air supplémentaires latéraux (15, 16) obliquement vers l'arrière, peut être pivoté vers le haut par le biais d'un dispositif de redressement respectif.

5. Dispositif de guidage d'air selon la revendication 4, **caractérisé en ce que** chaque dispositif de redressement présente au moins un élément de redressement (19), chacun des éléments de redressement (19) étant connecté de manière articulée d'une part à l'élément de guidage d'air supplémentaire respectif (15, 16) et d'autre part à une partie de la carrosserie (12).

6. Dispositif de guidage d'air selon la revendication 5, **caractérisé en ce que** les éléments de redressement (19) sont connectés les uns aux autres par le biais d'une barre transversale (20), qui vient en prise au niveau de points d'articulation entre les éléments de redressement (19) et l'élément de guidage d'air supplémentaire respectif (15, 16).

7. Dispositif de guidage d'air selon l'une quelconque ou plusieurs des revendications 1 à 6, **caractérisé en ce que** l'élément de guidage d'air principal central (14) est accouplé aux éléments de guidage d'air supplémentaires latéraux (15, 16) par le biais d'un dispositif d'accouplement de telle sorte que conjointement au déplacement des éléments de guidage d'air supplémentaires latéraux (15, 16), l'élément de guidage d'air principal (14) puisse pivoter vers le haut lors du transfert de la position de repos à la position fonctionnelle.

8. Dispositif de guidage d'air selon la revendication 7, **caractérisé en ce que** l'élément de guidage d'air principal central (14) est accouplé par le biais d'un élément d'accouplement respectif (21) aux éléments de guidage d'air supplémentaires latéraux (15, 16) et par le biais d'un autre élément d'accouplement (22) à la barre transversale (20) reliant les éléments de redressement (19).

9. Dispositif de guidage d'air selon l'une quelconque ou plusieurs des revendications précédentes 1 à 8, **caractérisé en ce que** les éléments de guidage d'air supplémentaires latéraux (15, 16) sont déplacés dans la position de repos à une position sous l'élément de guidage d'air principal central (14) et ne sont pas visibles.

10. Dispositif de guidage d'air selon l'une quelconque ou plusieurs des revendications 1 à 9, **caractérisé en ce que** les éléments de guidage d'air supplémentaires latéraux (15, 16) présentent, dans des portions avant, un renfoncement adapté au contour de l'arête arrière de l'élément de guidage d'air principal central (14), des portions arrière de l'élément de guidage d'air principal central (14) venant en prise dans les renfoncements dans la position fonctionnelle et de ce fait les éléments de guidage d'air supplémentaires latéraux (15, 16) agrandissent par affleurement l'élément de guidage d'air principal central (14).

11. Dispositif de guidage d'air selon l'une quelconque ou plusieurs des revendications 1 à 10, **caractérisé en ce qu'**un espace vide (23) entre la partie de la carrosserie (12) et une extrémité avant de l'élément de guidage d'air principal (14), se formant lors du déplacement de l'élément de guidage d'air principal central (14) de la position de repos à la position fonctionnelle, peut être fermé par un élément de fermeture (24 ; 28).
